# EUROPEAN PATENT APPLICATION

(11) **EP 3 513 898 A1**
(43) Date of publication of application: **24.07.2019**
(21) Application number: 18152547.8
(22) Date of filing: 19.01.2018
(51) Int. Cl.: B23K 26/38, B23K 26/042, B23K 26/146

(54) **APPARATUS FOR AUTOMATIC JET ANGLE ADJUSTMENT**

(71) Applicant: SYNOVA S.A., 1266 Duillier (CH); Makino Milling Machine Co., Ltd., Tokyo 152-8578 (JP)
(72) Inventor: Anderegg, Ludovic, 1029 Villars-Sainte-Croix (CH); Gheorghe, Adrian, 1004 Lausanne (CH); Kim, Hyuk, Meguro-Ku, Tokyo (JP); Diehl, Helgi, 1110 Morges (CH); Richerzhagen, Bernold, 1025 Saint-Sulpice (CH)
(74) Representative: Roth, Sebastian

(57) **Abstract**

The invention relates to an apparatus 100 for machining a workpiece with a laser beam 101. The apparatus 100 comprises a machining unit 102 configured to provide a pressurized fluid jet 103 and to couple the laser beam 101 into the fluid jet 103. It further comprises a motion unit 104 configured to rotate the machining unit 102 around an x-axis and/or y-axis, a determining unit 105 configured to determine a first angle between the fluid jet 103 and the y-axis and/or a second angle between the fluid jet 103 and the x-axis, and a processing unit 106 configured to control the motion unit 104 to rotate the machining unit 102 around the x-axis based on the first angle and/or around the y-axis based on the second angle.

## Description

### TECHNICAL FIELD

The present invention relates to an apparatus for machining a workpiece with a laser beam coupled into a pressurized fluid jet. According to the present invention, the apparatus is configured to automatically adjust an angle of the pressurized fluid jet beam with respect to at least one axis. The invention relates also to a method for adjusting an angle of a fluid jet guiding a laser beam. Adjusting the angle of the fluid jet includes specifically correcting the angle with respect to a target angle. Therefore, the present invention is also concerned with measuring at least one angle of the fluid jet in space.

### BACKGROUND

A conventional apparatus for machining a workpiece with a laser beam coupled into a pressurized fluid jet is generally known. In order to machine the workpiece with the laser beam, the laser beam is guided in the fluid jet onto the workpiece by means of total internal reflection.

If the workpiece is to be machined into a product with well-defined angles or inclined surfaces, it is necessary to repeatedly adjust the angle of the fluid jet with respect to the workpiece surface. The more accurately the fluid jet angle is adjustable the more precisely the product can be shaped. In some cases it may, for instance, be desirable to align the fluid jet precisely along the vertical direction, and to incline the workpiece surface against the vertical direction when an inclined structure is to be shaped. In other cases it may be desirable to precisely tilt (pitch & yaw) the pressurized fluid jet against the vertical direction, for instance, for producing more complex product structures.

A problem typically encountered in the conventional apparatus is that the angle of the fluid jet cannot at all be automatically adjusted by the apparatus. Any adjustment of the fluid jet angle can only be made manually, which is a rather cumbersome and time consuming process. Furthermore, after a certain time of using and handling the conventional apparatus, the fluid jet angle misaligns again. Small misalignments are, however, not easily noticed with the conventional apparatus, since the conventional apparatus cannot itself measure the current fluid jet angle. Further, a misaligned fluid jet angle cannot be corrected during the machining process. Therefore, and due to the time-consuming process of adjusting the fluid jet angle manually, fluid angle corrections are typically not carried in a regular manner, since this would significantly impact on the machining process time and efficiency. Accordingly, the preciseness of a machining process performed with the conventional apparatus is typically not optimized.

In view of the above problems and disadvantages, the present invention aims at improving the conventional apparatus for machining a workpiece with a laser beam coupled into a fluid jet and a corresponding method. It is an object of the invention to provide an apparatus and method that can automatically and precisely adjust at least one angle of the fluid jet that guides the laser beam. To this end, the apparatus and method of the invention should be able to accurately measure at least one fluid jet angle. The apparatus and method should also be able to automatically correct any deviation of a fluid jet angle from a target angle. It should be possible to make these angle adjustments and/or corrections faster, and ideally during the machining process of a workpiece. As a result, the present invention aims for an apparatus and method configured to machine a workpiece with inclined surfaces and/or complex structures with higher precision and improved process efficiency. Thereby, the invention aims also for a simple and compact apparatus implementation.

### SUMMARY OF THE INVENTION

The object of the present invention is achieved by the solution provided in the enclosed independent claims. Advantageous implementations of the present invention are defined in the dependent claims.

A first aspect of the present invention provides an apparatus for machining a workpiece with a laser beam, the apparatus comprising a machining unit configured to provide a pressurized fluid jet and to couple the laser beam into the fluid jet, a motion unit configured to rotate the machining unit around an x-axis and/or y-axis, a determining unit configured to determine a first angle between the fluid jet and the y-axis and/or a second angle between the fluid jet and the x-axis, and a processing unit configured to control the motion unit to rotate the machining unit around the x-axis based on the first angle and/or around the y-axis based on the second angle.

The determination of the at least one angle by the determining unit may include providing one or more representative measurement values to the processing unit, which then calculates the at least angle based on the measurement values. The determining unit may thereby obtain said measurement values under control of the processing unit. For instance, the processing unit may inform the determining unit how many measurements it needs to take, or when to take a measurement. However, the determining unit may also determine directly the at least one angle and provide it to the processing unit.

The processing unit may use the first angle and/or the second angle for providing the motion unit with at least one instruction for rotating the machining unit around at least one axis. By rotating the machining unit around the at least one axis, the motion unit is able to tilt the fluid jet in space against at least this axis.

Due to the interaction between the determining unit, the processing unit and the motion unit, at least one fluid jet angle can be automatically adjusted by the apparatus, particularly during the machining process. As a consequence, the at least one fluid jet angle is adjustable with higher precision and faster than (manually) possible for the conventional apparatus.

In a preferred implementation form of the apparatus, the processing unit is configured to control the motion unit to rotate the machining unit by a first adjustment angle around the x-axis and/or by a second adjustment angle around the y-axis, the first adjustment angle being defined by a difference between a first target angle and the first angle, and the second adjustment angle being defined by a difference between a second target angle and the second angle.

The at least one target angle may, for instance, be selected such that the fluid jet is aligned along the vertical direction. However, any target angle is possible, in particular since the pressurization of the fluid allows it to extend linearly, even when not aligned vertically. The automatic rotation of the machining unit by the at least one adjustment angle allows the immediate correction of misalignments of the fluid jet angel, which occur during or after a machining process. It is not necessary to interrupt the machining process and realign manually. The feedback from the determining unit allows the processing unit to control the motion unit for very fast angle corrections. As a consequence, more complex products can be shaped from the workpiece in a reasonable time.

In a further preferred implementation form of the apparatus, the motion unit is configured to rotate the machining unit with a precision of 1° or less around the x-axis and/or y-axis.

For instance, a precision of between 0.5°-1° or even 0.1°-1° or even 0.01°-0.1° is possible. Accordingly, the at least one angle of the fluid jet can be adjusted or corrected with very high precision, and thus allows very precisely fabricating complex product structures and shapes from the workpiece.

In a further preferred implementation form of the apparatus, the determining unit includes a mechanical unit, and a sensing unit configured to sense light of the laser beam and produce a sensing signal according to the sensed light, and the determining unit is configured to determine an x-position and/or y-position of the fluid jet based on a change of a sensing signal from the sensing unit while moving the machining unit relative to the mechanical unit in the x-direction and/or y-direction.

The sensing unit may include a camera, photodetector, or the like. The mechanical unit may include a plate, ring, cross etc. The movement unit may include a translation motor or the like. The determining unit is configured to optically measure the at least one position of the fluid jet non-invasively. The optical measurement delivers particularly high accuracy. It is further advantageous that the light of the laser beam is used for the measurement, since this allows for a simple and compact apparatus implementation. The x-position and/or y-position can be used for determining the at least one angle of the fluid jet, at least when the x-position and/or y-position of the fluid jet is determined for at least two z-positions.

In a further preferred implementation form of the apparatus, the mechanical unit includes at least a collision element with a sharp edge configured to disturb the fluid jet, when the fluid jet touches the sharp edge.

The collision element is preferably configured to reflect the laser beam, when hit by the fluid. The sharp edge is preferably configured to disturb the fluid jet very precisely and distinctly, when it touches the fluid jet, so that the laser beam reflection is disturbed as well. Thus, the mechanical unit can be used to produce an accurate signal for determining the at least one position of the fluid jet. The mechanical unit can be implemented or integrated with a machining surface that carries the workpiece during the machining process. Accordingly, the measurement by the determining unit can be carried out during the machining process, i.e. without stopping the apparatus, removing the workpiece and only then conducting a measurement of the fluid jet position. Furthermore, the mechanical unit allows a compact apparatus implementation.

In a further preferred implementation form of the apparatus, the mechanical unit includes a plate with a sharp edge as the collision element and/or the collision element is ring-shaped or cross-shaped.

This implementation realizes a simple and cheaply fabricated, but efficient to use mechanical unit.

In a further preferred implementation form of the apparatus, the apparatus further comprises a machining surface configured to mount the workpiece, wherein the mechanical unit includes or is attached to the machining surface.

In this way, the apparatus can carry out the angle measurements and adjustments while machining a workpiece. The workpiece and machining surface need not be removed for this purpose. The fluid jet may be moved by the apparatus during the machining process from the workpiece to the mechanical unit, in order measure the at least one fluid jet angle, adjust, correct or realign the fluid jet angle, and then continue with shaping the workpiece. As a consequence the workpiece can be structured faster and more efficiently into a product with inclined surfaces and/or complex structures.

In a further preferred implementation form of the apparatus, the determining unit further includes a movement unit configured to move the mechanical unit relative to the machining unit in the x-, y- and z-direction.

The movement unit can either move the mechanical unit or the machining unit or both, in order to realize the relative displacement between these two units.

In a further preferred implementation form of the apparatus, the processing unit is configured to control the determining unit to determine an x-position and/or y-position of the fluid jet at two or more different z-positions of the mechanical unit relative to the machining unit, in order to determine respectively the first angle and/or second angle.

The x- and/or y-positions measured at each one of the at least two z-positions can be used to determine one or two angles of the fluid jet in space. The processing unit can, for instance, control the movement unit and the sensing unit of the determining unit, and can calculate the angles from the measured positions.

In a further preferred implementation form of the apparatus, the sensing unit is arranged to sense light of the laser beam reflected from the mechanical unit, a machining surface or the workpiece

The light is preferably reflected by a dedicated collision element of the mechanical unit. The reflected light, particularly a change of the reflected light when the mechanical unit is moved relative to the machining unit, provides an accurate finger print of the position of the fluid jet. Thus, a precise measurement of at least two positions of the fluid jet and accordingly of the at least one angle is enabled.

In a further preferred implementation form of the apparatus, the sensing unit is integrated into the machining unit.

Thus, a compact apparatus can be built. Furthermore, the sensing unit is protected from e.g. fluids splashing back from the workpiece during the machining process.

In a further preferred implementation form of the apparatus, the sensing unit is arranged to sense light of the laser beam back-propagating through the fluid jet.

The fluid jet can guide the reflected laser light, like it guides the laser beam in the opposite direction onto the mechanical unit. In this way, the determining unit can work more accurately, since the light of interest is guided in a very controlled manner to the sensing unit. Furthermore, the least amount of optical components is required for such an implementation.

A second aspect of the present invention provides a method for angle adjustment of a pressurized fluid jet guiding a laser beam for machining a workpiece, the method comprising providing the fluid jet and coupling the laser beam into the fluid jet, determining a first angle between the fluid jet and a y-axis and/or a second angle between the fluid jet and an x-axis, and rotating the fluid jet around the x-axis based on the first angle and/or around the y-axis based on the second angle.

In a preferred implementation form of the method, the method comprises, defining a first target angle and/or a second target angle, determining the first and/or second angle, calculating a first adjustment angle by a difference between the first target angle and the first angle and/or a second adjustment angle by a difference between the second target angle and the second angle, and rotating the fluid jet by the first adjustment angle around the x-axis and/or by the second adjustment angle around the y-axis.

In a further preferred implementation form of the method, the method comprises defining a first tolerance and/or a second tolerance, and interrupting the method, before rotating the fluid jet, if the first adjustment angle is smaller than the first tolerance, or the second adjustment angle is smaller than the second tolerance, or the first adjustment angle is smaller than the first tolerance and the second adjustment angle is smaller than the second tolerance.

The method of the second aspect achieves the advantages and effects described above for the apparatus of the first aspect. The method can be further extended with implementation forms that resemble the various other preferred implementation forms described above for the apparatus of the first aspect. The method may particularly be carried out by the apparatus of the first aspect, or by any of its preferred implementation forms.

### BRIEF DESCRIPTION OF DRAWINGS

The above-described aspects and preferred implementation forms of the present invention are explained in the following description of specific embodiments in relation to the enclosed drawings, in which
- FIG. 1: shows an apparatus according to an embodiment of the present invention.
- FIG. 2: shows an apparatus according to an embodiment of the present invention.
- FIG. 3: shows an apparatus according to an embodiment of the present invention.
- FIG. 4: shows conceptually an apparatus according to an embodiment of the present invention determining a fluid jet angle.
- FIG. 5: shows a method according to an embodiment of the present invention.
- FIG. 6: shows a method according to an embodiment of the present invention.

### DETAILED DESCRIPTION OF EMBODIMENTS

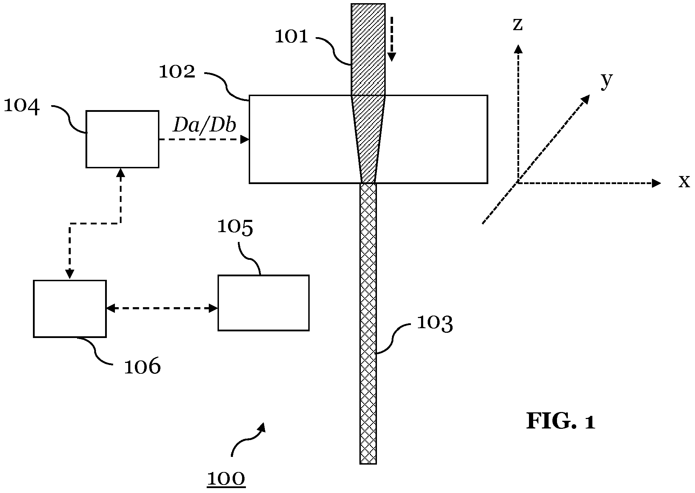

FIG. 1 shows an apparatus 100 according to an embodiment of the present invention. The apparatus 100 is configured to machine a workpiece with a laser beam 101 coupled into a pressurized fluid jet 103. The workpiece may be a made of a material including, for example, metals, ceramics, diamonds, semiconductors, alloys, superalloys, or ultra-hard materials. Machining the workpiece may include cutting or drilling the workpiece, or shaping the workpiece by material ablation in up to three dimensions. The laser beam preferably has a laser power of between 20-400 W or even more. The laser beam may thereby be a pulsed laser beam, but can also be a continuous laser beam. A pressure of the pressurized fluid jet is preferably between 50-800 bar

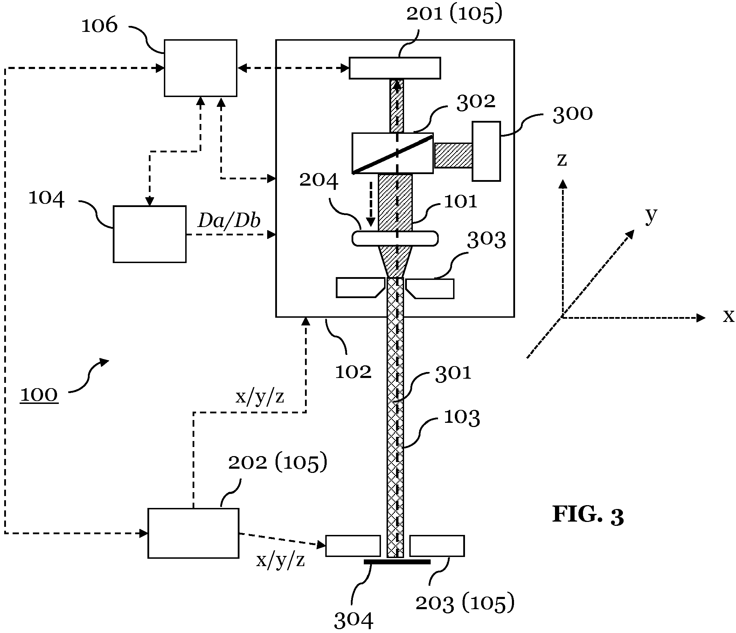

The apparatus 100 is configured to provide the fluid jet 103 onto the workpiece. The workpiece may be positioned on a machining surface 304 (shown in FIG. 3), which may or may not be part of the apparatus 100. In either case, the apparatus 100 is arranged such that it is able to machine the workpiece disposed on the machining surface 304. The apparatus 100 may control movements of the machining surface 304 in up to five dimensions.

The apparatus 100 of the present invention is particularly designed for angle adjustment(s) of the pressurized fluid jet 103, which guides the laser beam 101. Accordingly, the components of the apparatus 100 required for this purpose are shown in FIG. 1. In particular, the apparatus 100 comprises a machining unit 102, a motion unit 104, a determining unit 105, and a processing unit 106.

The machining unit 102 is configured to provide the pressurized fluid jet 103, and to couple the laser beam 101 into the fluid jet 103.

The motion unit 104 is configured to rotate the machining unit 102 around an x-axis and/or y-axis, i.e. around at least one axis. The x-axis and the y-axis are preferably perpendicular to another (as indicated in FIG. 1). A z-axis is preferably perpendicular on both x-axis and y-axis. The x-axis and the y-axis may define the horizontal plane, and the z-axis may define the vertical direction, however, this must not necessarily be the case. The pressurized fluid jet 103 (i.e. its direction of propagation) may be parallel to the z-axis and/or to the vertical direction. However, since the fluid jet 103 is pressurized, such an alignment is not necessary for it to propagate linearly.

The motion unit 104 may, for example, control the machining unit 102 by rotating it by a first adjustment angle *Da* around the x-axis and/or by rotating it around a second adjustment angle *Db* around the y-axis. In this manner, the machining unit 102 - and thus also the fluid jet 103 - tilt against the y- and z-axis and/or the x-and z-axis, respectively.

The determining unit 105 is configured to determine a first angle between the fluid jet 103 (its propagation direction) and the y-axis and/or a second angle between the fluid jet 103 (its propagation direction) and the x-axis. That is, the determining unit 105 is able to determine at least one (current) angle of the fluid jet 103. Thereby, the determination of this at least one angle may mean determining, by the determining unit, representative (raw) measurement values, which the processing unit 106 can process into (values of) angles, or may mean outputting directly calculated values of the angles to the processing unit 106.

The processing unit 106 is configured to control the motion unit 104 based on the at least one angle of the fluid jet 103 that is determined by the determining unit 105. That is, the processing unit 106 is configured to control the motion unit 104 based on at least one current angle of the fluid jet 103. It can particularly control the motion unit 104 to rotate the machining unit 102 around the x-axis based on the first determined angle and/or around the y-axis based on the second determined angle. Thereby, the processing unit 106 can use the determined angle(s) to calculate, for example, the above-mentioned at least one adjustment angle *Da* and/or *Db.*

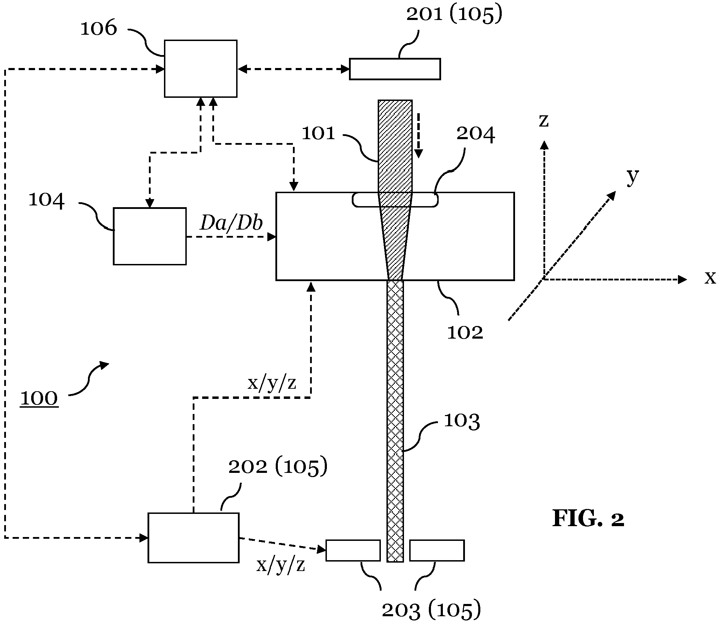

FIG. 2 shows an apparatus 100 according to an embodiment of the present invention, which builds on the apparatus 100 shown in FIG. 1. Identical elements in FIG. 2 and FIG. 1 are labeled with the same reference signs and function likewise. Accordingly, the apparatus 100 of FIG. 2 also comprises the machining unit 102 for producing the fluid jet 103 guiding the laser beam 101, the motion unit 104 for controlling rotation(s) of the machining unit 102, the processing unit 106 for controlling at least the motion unit 104, and the determining unit 105 for determining the at least one angle of the fluid jet 103.

FIG. 2 illustrates the determining unit 105 in more detail. In particular, the determining unit 105 in FIG. 2 includes a mechanical unit 203, a movement unit 202, and a sensing unit 201.

The sensing unit 201 is configured to sense light of the laser beam 101 (i.e. it is sensitive to the wavelength of the laser beam), and to produce a sensing signal according to the sensed light (i.e. the sensing signal reflects at least the intensity of the received light). The sensing unit 201 is exemplarily shown in FIG. 2 as being arranged above the machining unit 102. However, the sensing unit 102 may also be arranged elsewhere, where it can receive reflected laser light. For instance, it may be arranged below the machining unit 102 and/or next to the fluid jet 103, or even below the mechanical unit 203.

The determining unit 105 is specifically configured to determine an x-position and/or y-position of the fluid jet 103 based on a change of the sensing signal provided by the sensing unit 201, while the machining unit 102 is moved relative to the mechanical unit 203 in the x-direction and/or y-direction. The determining unit 105 may thereby be configured to generate, with the sensing unit 201, a plurality of sensing signals at different positions of the mechanical unit 203 relative to the machining unit 102. That is, the mechanical unit 203 may be moved relative to the machining unit 102, and the sensing unit 201 may meanwhile produce at least one sensing signal, for instance, a sensing signal each determined time interval and/or after each step of movement.

For moving the mechanical unit 203, the determining unit 105 includes the movement unit 202. The movement unit 202 is preferably configured to move the mechanical unit 203 relative to the machining unit 102 in the x-, y- and z-direction. Particularly, the movement unit 202 may move the mechanical unit 203 and/or the machining unit 102, in order to realize the relative movement.

When the machining unit 102 is moved with respect to the mechanical unit 203, laser light may be reflected in different manners from the mechanical unit 203, particularly in dependence of the current x/y-positions of the fluid jet 103 (notably, it is thereby possible that the laser light will not be reflected at all from the mechanical unit 203 at some x/y-positions).

The determining unit 105 may be configured to determine a first and second x-position and/or y-position of the fluid jet 103 as described above at two or more different z-positions of the mechanical unit 203 relative to the machining unit 102. To this end, the movement unit 202 can, for example, move the mechanical unit 203 to a first z-position with respect to the machining unit 102, at which the determining unit 105 determines a first x-position and/or a first y-position. Then, the movement unit 202 can move the mechanical unit 203 to a different second z-position, at which the determining unit 105 determines a second x-position and/or a second y-position. Based on the first and second x-position and/or the first and second y-position, the determining unit 105 can then determine, respectively, the first angle and/or second angle of the fluid jet 103.

The processing unit 106 can particularly control the determining unit 105 to perform the above-mentioned positional determination(s) at different z-positions of the mechanical unit 203. For instance, as indicated (by dashed arrows) in FIG. 2, the processing unit 106 can control the sensing unit 201 to sense light and to output a sensing signal, and can of course receive and process this sensing signal. Further, the processing unit 106 can control the movement unit 202 to move the mechanical unit 203, and can receive feedback form the movement unit 202 about the set position(s). The processing unit 106 can thus process sensing signals of the sensing unit 201 in view of x-, y- and z-positions set and fed-back by the movement unit 202, in order to calculate the x-position and/or y-position of the fluid jet 103, and eventually calculate the first and/or second angle.

The processing unit 106 is, for example, realized by a microprocessor or computer and/or software, and may apply signal processing on the sensing signal(s) received from the sensing unit 201. Signal processing may include, for example, scaling, averaging, recording over time, integrating over time, or converting the sensing signal(s), and may include comparing the sensing signal(s) - or an averaged or integrated signal - with one or more reference signals.

The processing unit 106 may further control the machining unit 102. In particular, it may control the generation and/or pulsing (pulse width, amplitude and/or rate) of the laser beam 101 generated by means of a laser unit. Further, it may also control the generation and the pressure of the fluid jet 103, e.g. by controlling a fluid source supplying the fluid for the fluid jet 103 and/or by controlling supply valves and/or pumps.

The machining unit 102 may further include at least one optical element 204, like a lens, for coupling the laser beam 101 into the fluid jet 102. The laser beam 101 may be produced by a laser unit that can be controlled by the processing unit 106. The machining unit 102 may also include an optically transparent protection window (not shown), in order to separate the optical arrangement, here exemplarily the at least one optical element 204, from the fluid circuitry and from the region of the machining unit 102 where the fluid jet 103 is produced.

FIG. 3 shows an apparatus 100 according to an embodiment of the present invention, which builds on the apparatus 100 shown in FIG. 2. Identical elements in FIG. 3 and in FIG. 2 are labeled with the same reference signs and function likewise. In particular, the apparatus 100 in FIG. 3 includes again the machining unit 102 for producing the fluid jet 103 carrying the laser beam 101, the motion unit 104 for moving/rotating the machining unit 102, the determining unit 105 (including the sensing unit 201, movement unit 202 and mechanical unit 203) for angle measurement, and the processing unit 106 for controlling preferably all actions of the apparatus 100 and its units.

FIG. 3 shows more details of the machining unit 102. For producing the fluid jet 103, the machining unit 102 preferably includes a fluid jet generation nozzle 303 with a nozzle aperture. The fluid jet generation nozzle 303 is preferably disposed within the machining unit 102, in order to produce the fluid jet 103 in a protected environment. The nozzle aperture defines the width of the fluid jet 103. The nozzle aperture has preferably a diameter of 10-200 µm, and the fluid jet 103 has preferably a diameter of about 0.6-1 times the nozzle aperture. The pressure for the pressurized fluid jet 103 is provided via an external fluid supply, which may be controlled by the processing unit 106. The fluid supplied for the fluid jet 103 is preferably water, i.e. the fluid jet 103 is a water jet. For outputting the fluid jet 103 from the apparatus 100, the machining unit 102 preferably includes an exit nozzle with an exit aperture. The exit aperture is preferably wider than the nozzle aperture.

The machining unit 102 may also include a laser source 300, and the processing unit 106 may control the laser source 300. The laser source 300 is configured to supply the laser beam 101. The laser source 300 may also be an external device not included in the machining unit 102 and apparatus 100, respectively, which supplies the laser light to a laser supply port of the machining unit 102. In the machining unit 102 the laser beam 101 is preferably directed by an optical unit 302 towards the at least one optical element 204 for coupling it into the fluid jet 103. The optical unit 302 is preferably a beam splitter and is preferably arranged in the optical path between the at least one optical element 204 and the sensing unit 201 of the determining unit 105.

Notably, also reflected laser light 301 (in FIG. 3 reflected from a machining surface 304) may preferably travel in the fluid jet 103 through the optical unit 302 in an opposite direction than the laser beam 101. The reflected laser light 301 is directed by the optical unit 302 towards the sensing unit 201. In FIG. 3, the sensing unit 201 is advantageously (but only optionally) included inside the machining unit 102.

The apparatus 100 may also include (not shown) a spectral separation unit, which is configured to isolate at least a part of the reflected light 301 onto the sensing unit 201. The spectral separation unit may be preferably arranged in the optical path between the optical unit 302 and the sensing unit 201, such that it receives reflected laser light 301 travelling through the fluid jet 103 and the optical unit 302, and outputs light of interest - which includes at least the part of the reflected light 301 - onto the sensing unit 201. The spectral separation unit may be an optical filter unit, which may consist of one or more optical filters and is configured to filter out undesired electromagnetic radiation (especially other light). That is, it is configured to prevent light of certain (undesired) wavelengths from reaching the sensing unit 201. Light (other than reflected laser light 301) that accidently reaches the spectral separation unit - and would thus reach the sensing unit 201 without the spectral separation unit - is accordingly filtered out.

Laser light may be reflected - as shown in FIG. 3 - from a machining surface 304, onto which the laser beam 101 impinges. Likewise, it may also be reflected from a workpiece provided on the machining surface 304. The reflected light 301 may be sensed by the sensing unit 201, which is preferably integrated into the machining unit 102. Thus, the sensing unit 201 is preferably arranged and configured to sense light 301 of the laser beam 101 back-propagating through the fluid jet 103. Laser light may also be reflected from the mechanical unit 203, when the mechanical unit 203 is moved by the movement unit 202 (situation not shown in FIG. 3) into the fluid jet 103.

However, the reflection of the laser beam 101 from the mechanical unit 203 may be different than the reflection of the laser beam 101 from the machining surface 304 or from the workpiece, respectively. Any resulting change in reflection may be detected by the sensing unit 201, and may be used - for example by the processing unit 106 - to determine the x-position and/or y-position of the fluid jet 103 at a given z-position of the mechanical unit 203 relative to the machining unit 102. It may also be that when the fluid jet 103 touches the mechanical unit 203, the mechanical unit 203 disturbs the fluid jet 103 in such a manner that the laser beam 101 is not anymore back-reflected into the fluid jet 103 and guided towards the sensing unit 201, but is scattered. This is explained in more detail below.

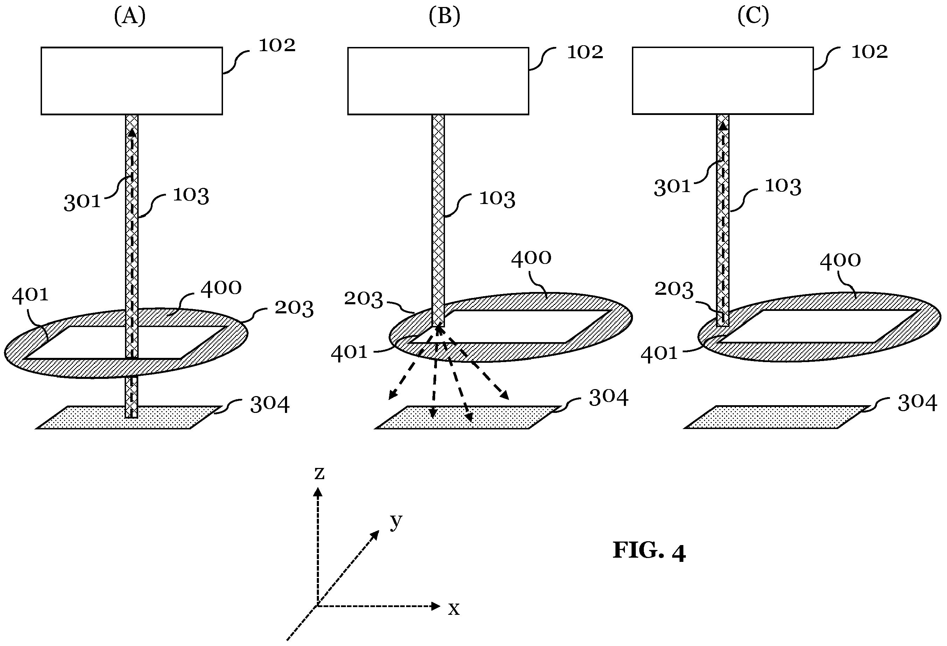

FIG. 4 shows conceptually an apparatus 100 according to an embodiment of the present invention exemplarily determining a fluid jet 103 angle. In FIG. 4 the mechanical unit 203 includes at least a collision element 400 with an edge 401. In particular, the collision element 400 has preferably a sharp edge 401, wherein "sharp" preferably means that the edge 401 is shaped like that of a knife. The sharp edge 401 is configured to disturb the fluid jet 103, when the fluid jet 103 touches it. The sharp edge 401 is formed e.g. by the inner edge of an aperture provided in the collision element 400. Specifically, as shown in FIG. 4, the mechanical unit 203 may include a plate 400 as the collision element 400 having the edge 401. Alternatively or additionally, the collision element 400 may be ring-shaped or cross-shaped.

In FIG. 4(A), the machining unit 102 outputs the fluid jet 103, and the mechanical unit 203 is arranged such with respect to the machining unit 102 (e.g. positioned by the movement unit 202) that the fluid jet 103 passes through the aperture in the collision element 400 and impinges on a machining surface 304. At least part of the laser beam 101 is reflected from the machining surface 304, and the reflected light 301 travels back through the fluid jet 103 (in the direction opposite to the laser beam 101), and into the machining unit 102. There, it may be detected by the sensing unit 201. With no workpiece yet mounted onto the machining surface 304, the shown angle determination and adjustment process is advantageously carried out before mounting and machining the workpiece. However, the same determination and adjustment process is also possible with a mounted workpiece during a machining process. In this case, the workpiece may reflect laser light in the situation of FIG. 4(A).

In FIG. 4(B), the mechanical unit 203 is moved (e.g. by the movement unit 202) such that the fluid jet 103 touches the edge 401 of the collision element 400. This disturbs the fluid jet 103 such that the laser beam 101 is not back-reflected anymore, but is lost e.g. through scattering. That is, when the fluid jet 103 touches the sharp edge 401, then there is no reflected light 301 (or at least significantly less reflected light 301) that can be detected by the sensing unit 201.

In FIG. 4(C), the mechanical unit 203 is moved even further (e.g. by the movement unit 202) such that the fluid jet 103 impinges onto the collision element 400 of the mechanical unit 203. At least part of the laser beam 101 is now reflected from the collision element 400, and the reflected light 301 again travels back through the fluid jet 103 (in the direction opposite to the laser beam 101), and into the machining unit 102. There, it may be detected by the sensing unit 201. The reflection (intensity) may be the same as in FIG. 4(A), or the reflection may be less or more intense than when reflected from e.g. the machining surface 304. That is, the sensing unit 201 may be able to distinguish the reflected light 301 in the situations shown in FIG. 4(A) and 4(C).

In any case, the change of the reflection pattern when moving from the situation of FIG. 4(A) to 4(B) and to 4(C) is reflected in the sensing signal output by the sensing unit 201, and can accordingly be used to determine the position of the fluid jet 103, and finally an angle of the fluid jet 103, if the procedure is carried out at two or more different z-positions.

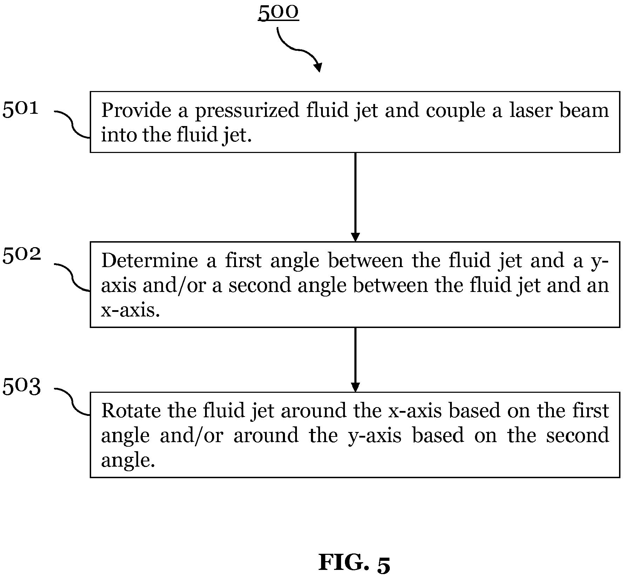

FIG. 5 shows a method 500 for angle adjustment of a pressurized fluid jet 103 guiding a laser beam 101 according to an embodiment of the present invention. The laser beam 101 is usable for machining a workpiece. The method 500 may be carried out by the apparatus 100 as shown in one of the FIGs. 1-4, respectively. The method 500 particularly comprises a step 501 of providing the fluid jet 103 and coupling the laser beam 101 into the fluid jet 103, comprises a step 502 of determining a first angle between the fluid jet 103 and a y-axis and/or a second angle between the fluid jet 103 and an x-axis, and comprises a step 503 of rotating the fluid jet 103 around the x-axis based on the first angle and/or around the y-axis based on the second angle.

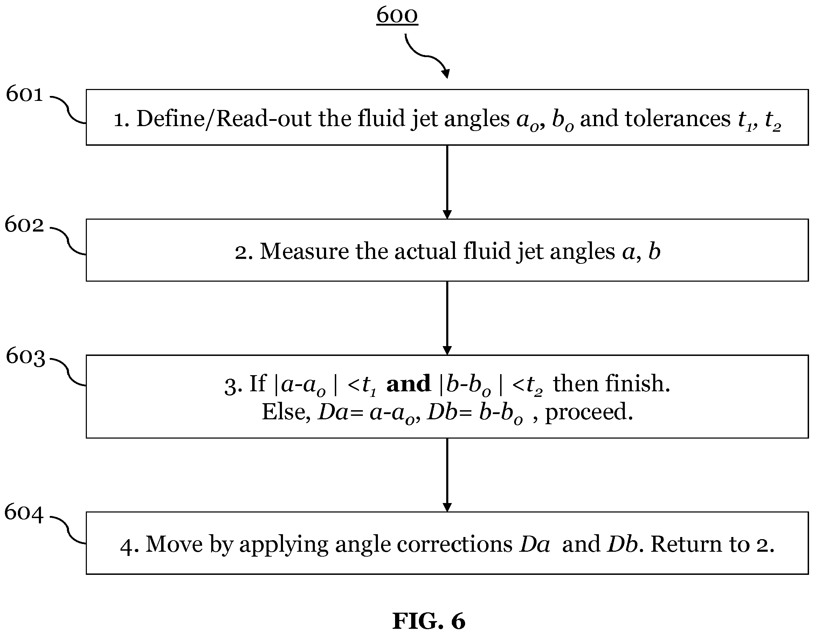

FIG. 6 shows a method 600, which builds on the method 500 shown in FIG. 5. The method 600 preferably comprises the following steps:
1. Defining 601 (or reading out, e.g. from a memory or other storage medium) a first target angle *a₀* and/or a second target angle *b₀*, and preferably defining a first tolerance *t₁* and/or a second tolerance *t₂.*
2. Determining 602 (like in step 502 of the method 500) the first and/or second angle (*a* and/or *b*) of the fluid jet 103.
3. Calculating 603 a first adjustment angle *Da* by a difference between the first target angle *a₀* and the first angle *a* and/or a second adjustment angle *Db* by a difference between the second target angle *b₀* and the second angle *b*.
   Finishing the method 600, if the first adjustment angle *Da* is smaller than the first tolerance, or if the second adjustment angle *Db* is smaller than the second tolerance, or preferably if the first adjustment angle *Da* is smaller than the first tolerance *t₁* and the second adjustment angle *Db* is smaller than the second tolerance *t₂*.
4. Rotating 604 (like in step 503 of the method 500) the fluid jet 103 by the first adjustment angle *Da* around the x-axis and/or by the second adjustment angle *Db* around the y-axis. Then preferably returning to 2. (step 602), and repeating the all steps until the method 600 is finally ended in any instance of 3. (step 603).

The present invention has been described in conjunction with various embodiments as examples as well as implementation forms. However, other variations can be understood and effected by those persons skilled in the art and practicing the claimed invention, from the studies of the drawings, the description and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Apparatus (100) for machining a workpiece with a laser beam (101), the apparatus (100) comprising
a machining unit (102) configured to provide a pressurized fluid jet (103) and to couple the laser beam (101) into the fluid jet (103),
a motion unit (104) configured to rotate the machining unit (102) around an x-axis and/or y-axis,
a determining unit (105) configured to determine a first angle between the fluid jet (103) and the y-axis and/or a second angle between the fluid jet (103) and the x-axis, and
a processing unit (106) configured to control the motion unit (104) to rotate the machining unit (102) around the x-axis based on the first angle and/or around the y-axis based on the second angle.

2. Apparatus (100) according to claim 1, wherein
the processing unit (106) is configured to control the motion unit (104) to rotate the machining unit (102) by a first adjustment angle around the x-axis and/or by a second adjustment angle around the y-axis,
the first adjustment angle being defined by a difference between a first target angle and the first angle, and
the second adjustment angle being defined by a difference between a second target angle and the second angle.

3. Apparatus (100) according to claim 1 or 2, wherein
the motion unit (104) is configured to rotate the machining unit (102) with a precision of 1° or less around the x-axis and/or y-axis.

4. Apparatus (100) according to one of the claims 1 to 3, wherein
the determining unit (105) includes
a mechanical unit (203), and
a sensing unit (201) configured to sense light of the laser beam (101)
and produce a sensing signal according to the sensed light, and
the determining unit (105) is configured to determine an x-position and/or y-position of the fluid jet (103) based on a change of a sensing signal from the sensing unit (201) while moving the machining unit (102) relative to the mechanical unit (203) in the x-direction and/or y-direction.

5. Apparatus (100) according to claim 4, wherein
the mechanical unit (203) includes at least a collision element (400) with a sharp edge (401) configured to disturb the fluid jet (103), when the fluid jet (103) touches the sharp edge (401).

6. Apparatus (100) according to claim 5, wherein
the mechanical unit (203) includes a plate (400) with a sharp edge (401) as the collision element (400) and/or
the collision element (400) is ring-shaped or cross-shaped.

7. Apparatus (100) according to claim 5 or 6, further comprising
a machining surface (304) configured to mount the workpiece, wherein
the mechanical unit (203) includes or is attached to the machining surface (304).

8. Apparatus (100) according to one of the claims 4 to 7, wherein
the determining unit (105) further includes a movement unit (202) configured to move the mechanical unit (203) relative to the machining unit (102) in the x-, y- and z-direction.

9. Apparatus (100) according to one of the claims 4 to 8, wherein
the processing unit (106) is configured to control the determining unit (105) to determine an x-position and/or y-position of the fluid jet (103) at two or more different z-positions of the mechanical unit (203) relative to the machining unit (102), in order to determine respectively the first angle and/or second angle.

10. Apparatus (100) according to one of the claims 4 to 9, wherein
the sensing unit (201) is arranged to sense light (301) of the laser beam (103) reflected from the mechanical unit (203), a machining surface (304) or the workpiece

11. Apparatus (100) according to one of the claims 4 to 10, wherein
the sensing unit (201) is integrated into the machining unit (102).

12. Apparatus (100) according to one of the claims 4 to 11, wherein
the sensing unit (201) is arranged to sense light (301) of the laser beam (101) back-propagating through the fluid jet (103).

13. Method (500) for angle adjustment of a pressurized fluid jet (103) guiding a laser beam (101) for machining a workpiece, the method (500) comprising
providing (501) the fluid jet (103) and coupling the laser beam (101) into the fluid jet (103),
determining (502) a first angle between the fluid jet (103) and a y-axis and/or a second angle between the fluid jet (103) and an x-axis, and
rotating (503) the fluid jet (103) around the x-axis based on the first angle and/or around the y-axis based on the second angle.

14. Method (600) according to claim 13, comprising
defining (601) a first target angle and/or a second target angle, determining (502, 602) the first and/or second angle,
calculating (603) a first adjustment angle by a difference between the first target angle and the first angle and/or a second adjustment angle by a difference between the second target angle and the second angle, and
rotating (503, 604) the fluid jet (103) by the first adjustment angle around the x-axis and/or by the second adjustment angle around the y-axis.

15. Method (600) according to claim 14, comprising
defining (601) a first tolerance and/or a second tolerance, and interrupting the method (600), before rotating (503, 604) the fluid jet (103), if
the first adjustment angle is smaller than the first tolerance, or
the second adjustment angle is smaller than the second tolerance, or
the first adjustment angle is smaller than the first tolerance and the second adjustment angle is smaller than the second tolerance.
